# EUROPEAN PATENT SPECIFICATION

(11) **EP 2 009 669 B1**
(45) Date of publication and mention of the grant of the patent: **02.11.2011**
(21) Application number: 08157058.2
(22) Date of filing: 28.05.2008
(51) Int. Cl.: H01J 7/18, H01J 29/94, H01J 63/06, H01J 9/26

(54) **Light emission device and display device using the light emission device as a light source**
Lichtemissionsvorrichtung und die Lichtemissionsvorrichtung als Lichtquelle verwendende Anzeigevorrichtung
Dispositif d'émission de lumière et dispositif d'affichage utilisant le dispositif d'émission de lumière en tant que source lumineuse

(30) Priority: 28.06.2007 KR 20070064307
(43) Date of publication of application: 31.12.2008
(73) Proprietor: Samsung SDI Co., Ltd., Suwon-si Gyeonggi-do (KR)
(72) Inventor: Song, Gi-Young Legal & IP Team, Suwon-si, Gyeonggi-do (KR)
(74) Representative: Hengelhaupt, Jürgen

(56) References cited:
- JP-A- 5 151 916
- US-A- 5 646 702
- US-A- 6 031 328
- US-A1- 2006 273 709
- US-A1- 2007 051 965
- US-B1- 6 191 529

## Description

### BACKGROUND OF THE INVENTION

### Field of the Invention

The present invention relates to a light emission device having a vacuum vessel and a display device using the light emission device for a light source. The present invention further relates to a getter provided inside the vacuum vessel to adsorb gaseous molecules remaining within the vacuum vessel after an exhaust process.

### Description of Related Art

There are many different types of light emission devices that radiate visible light. One type of light emission device includes a structure in which a light emission unit having an anode electrode and a phosphor layer is disposed on a front substrate, and an electron emission unit having a plurality of electron emission elements is disposed on a rear substrate. The inner space between the front and rear substrates is sealed along a periphery of the substrates using a sealing member, and the inner space between the front and rear substrates is exhausted to form a vacuum vessel. Exemplary embodiments of such light emission devices are disclosed in US 2007/051 965 A1.

The electron emission elements emit electrons toward the phosphor layer, and the electrons excite the phosphor layer to make the phosphor layer emit visible light. The anode electrode receives a high voltage (anode voltage) of a few thousand volts, to accelerate the electrons toward the phosphor layer.

When the vacuum vessel is in a high vacuum state, emission efficiency and durability of the electron emission elements can be improved. After an exhaust process of the vacuum vessel, a getter activation process of a getter that is provided inside the vacuum vessel is conducted to adsorb and remove gaseous molecules remaining within the vacuum vessel.

Each of the front and rear substrates includes an active area in which the light emission unit or the electron emission unit is located, and a non-active area surrounding the active area. In the conventional light emission device, the getter may be located on one substrate of the front and rear substrates at the non-active area. Alternatively, the getter may be located inside a getter chamber that is attached to the rear substrate on the non-active area.

However, in the former case, since there has been a tendency in recent light emission devices to reduce the width of the non-active area to minimize dead space from which visible light is not emitted, it is difficult to mount the getter in the non-active area having a narrow width. In addition, a conductive getter material may be diffused into the active area during the getter activation process, thereby causing a short circuit between adjacent driving electrodes and damage to the phosphor layer.

In the latter case, manufacture of the vacuum vessel is complicated by adding a process for forming a hole at the rear substrate where the getter chamber is to be attached and a process for sealing the getter chamber at the exterior of the rear substrate. Also, in both the former and latter cases, since an adsorption area of the getter is not sufficient, the getter has low adsorption efficiency.

The above information disclosed in this Background section is only for enhancement of understanding of the background of the invention and therefore it may contain information that does not form the prior art that is already known in this country to a person of ordinary skill in the art.

### SUMMARY OF THE INVENTION

Exemplary embodiments in accordance with the present invention provide a light emission device that can enhance a degree of vacuum of a vacuum vessel by increasing adsorption efficiency of a getter, and thus improve emission efficiency and durability of electron emission elements, and a display device using the light emission device as a light source.

Embodiments of the present invention are defined in the claims and include a light emission device comprising a first substrate, a second substrate facing the first substrate with an inner space formed between the first and the second substrate, a sealing member disposed between the first and second substrates in a manner that the sealing member encloses the inner space, an electron emission unit arranged on an inner surface of the first substrate that faces the inner space, a light emission unit arranged on an inner surface of the second substrate that faces the inner space, and a getter layer arranged on an inner surface of the sealing member that faces the inner space. The electron emission unit includes a plurality of electron emission regions for emitting electrons, and the light emission unit includes an anode electrode and a phosphor layer.

The sealing member includes a glass frame. A first adhesive layer is arranged between the glass frame and the first substrate, and a second adhesive layer is arranged between the glass frame and the second substrate. The getter layer is disposed on the glass frame.

The light emission device may further comprise a barrier located between the getter layer and the electron emission unit. The height of the barrier may be the same as the height of the sealing member.

The light emission device further comprises a wire disposed between the sealing member and the getter layer. The wire extends out of the inner space, and the getter layer includes a non-evaporating getter material.

The electron emission unit may further comprise a cathode electrode, a gate electrode crossing the cathode electrode, and an insulation layer disposed between the cathode electrode and the gate electrode. At least one of the electron emission regions is connected to the cathode electrode. The electron emission unit may further include a focusing electrode for focusing an electron beam that is generated from the at least one of the electron emission regions.

The electron emission unit may further include a first electrode, a second electrode being insulated from the first electrode and crossing the first electrode, a first conductive layer electrically connected to the first electrode, and a second conductive layer electrically connected to the second electrode. One of the electron emission regions is located between the first and second conductive layers in a manner that a portion of the one of the electron emission regions is exposed to the inner space in order to emit electrons into the inner space.

The phosphor layer may emit white visible light. The height of the sealing member may be about 5 millimeters to about 20 millimeters.

Another exemplary embodiment of the present invention includes a display device comprising a display panel for displaying an image and a light emission device for emitting light toward the display panel. The light emission device includes a first substrate, a second substrate facing the first substrate with an inner space formed between the first and the second substrate, a sealing member disposed between the first and second substrates in a manner that the sealing member encloses the inner space, an electron emission unit arranged on an inner surface of the first substrate that faces the inner space, a light emission unit arranged on an inner surface of the second substrate that faces the inner space, and a getter layer arranged on an inner surface of the sealing member that faces the inner space. The electron emission unit includes a plurality of electron emission regions for emitting electrons, and the light emission unit includes an anode electrode and a phosphor layer.

The display panel includes first pixels and the light emission device includes second pixels. Each of the second pixels corresponds to at least one of the electron emission regions. The number of second pixels may be less than that of the first pixels, and luminance of each second pixel may be independently controlled in response to a highest gray level among gray levels of the corresponding first pixels. The display panel may be a liquid crystal display panel.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is a partial sectional view illustrating a first exemplary light emission device constructed not according to the present invention;
FIG. 2 is a partially exploded perspective view illustrating an internal structure of an active area in the light emission device shown in FIG. 1;
FIG. 3 is a perspective view illustrating a first substrate and a sealing member in the light emission device shown in FIG. 1;
FIG. 4 is a partial sectional view illustrating a second exemplary light emission device constructed not according to the present invention;
FIG. 5 is a partially cut-away perspective view illustrating a sealing member, a getter layer, and a barrier in the light emission device shown in FIG. 4;
FIG. 6 is a partial sectional view illustrating a third exemplary light emission device constructed as an exemplary embodiment of the present invention;
FIG. 7 is an exploded perspective view illustrating a display device;
FIG. 8 is a partial sectional view illustrating a display panel in the display device shown in FIG. 7;
FIG. 9 is a partially exploded perspective view illustrating a fourth exemplary light emission device constructed not according to the present invention;
FIG. 10 is a partial sectional view illustrating a fifth exemplary light emission device constructed not according to the present invention; and
FIG. 11 is a top view illustrating an electron emission unit in the light emission device shown in FIG. 10.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather these embodiments are provided so that this disclosure will be thorough and complete, and will fully convey the concept of the invention to those skilled in the art.

In exemplary embodiments of the present invention, all of the light emission devices that can emit light to an external side are regarded as light emission devices. Therefore, all of display devices that can transmit information by displaying symbols, letters, numbers, and images may be regarded as the light emission devices. In addition, the light emission device may be used as a light source for emitting light to a display panel of a non-emissive type.

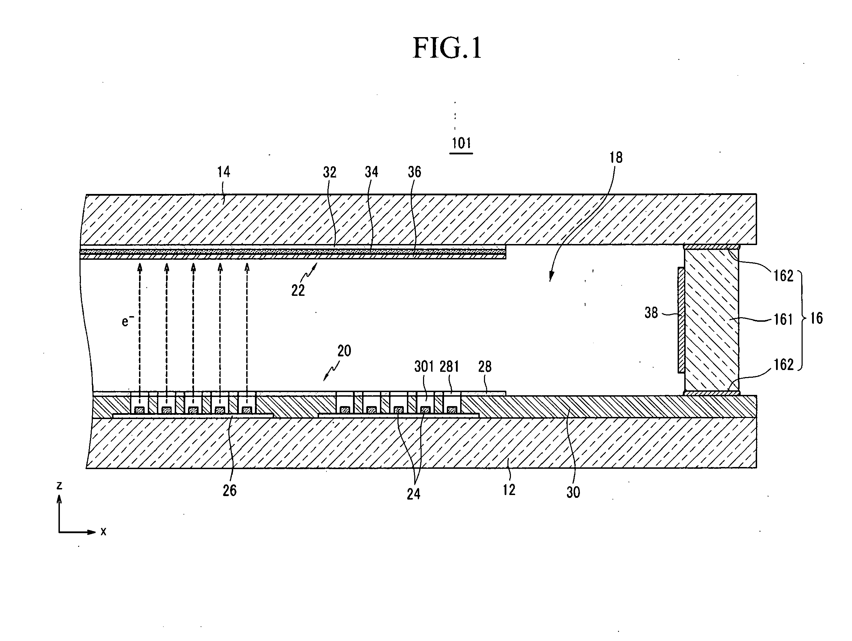

A first exemplary light emission device constructed not according to the present invention will be described with reference to FIGS. 1 to 3. Referring to FIGS. 1 to 3, a light emission device 101 of the present embodiment includes first and second substrates 12 and 14 facing each other in parallel with a predetermined interval therebetween. An inner space is formed between the first and the second substrates 12 and 14. A sealing member 16 is provided between the first and second substrates 12 and 14 in a manner that the sealing member 16 encloses the inner space formed between the first and the second substrates 12 and 14. The sealing member 16 is formed on peripheries of the first and the second substrates 12 and 14. Therefore, the first and second substrates 12 and 14 seal the inner space together with the sealing member 16, and thus form a vacuum vessel 18. The inner space of the vacuum vessel 18 is kept in a vacuum state having pressure about 1.33* 10⁻⁴ Pa (10⁻⁶ Torr).

Inside the sealing member 16, each of the first and second substrates 12 and 14 may be divided into an active area from which visible light is actually emitted and a non-active area surrounding the active area. An electron emission unit 20 including a plurality of electron emission elements is provided on an inner surface of the first substrate 12 at the active area, and a light emission unit 22 for emitting the visible light is provided on an inner surface of the second substrate 14 at the active area. Herein, the inner surface of the substrate is defined as a surface that faces the inner space formed between the first and the second substrates 12 and 14.

The second substrate 14 on which the light emission unit 22 is located may be a front substrate of the light emission device 101, and the first substrate 12 on which the electron emission unit 20 is located may be a rear substrate of the light emission device 101.

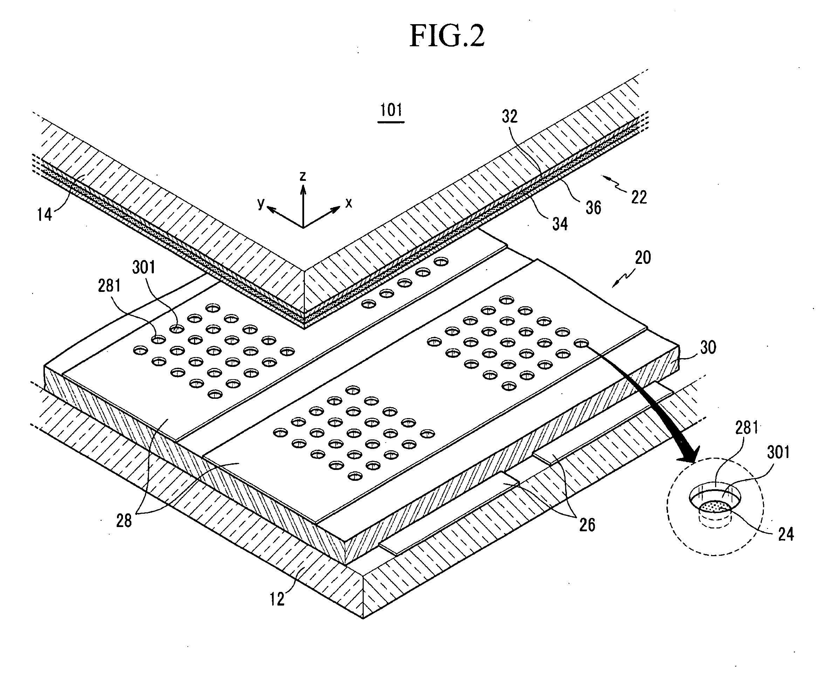

The electron emission unit 20 includes electron emission regions 24 and driving electrodes for controlling a number of electrons emitted from the electron emission regions 24. The driving electrodes include cathode electrodes 26 that are arranged in a stripe pattern extending in a first direction (y-axis shown in FIG. 2) of the first substrate 12, and gate electrodes 28 that are arranged in a stripe pattern extending in a second direction (x-axis shown in FIG. 2) that is perpendicular to the first direction. An insulation layer 30 is interposed between the cathode electrodes 26 and the gate electrodes 28.

First openings 281 and second openings 301 are respectively formed in the gate electrodes 28 and the insulation layer 30 at each region where the cathode and gate electrodes 26 and 28 intersect each other to partially expose the cathode electrodes 26. The electron emission regions 24 are located on the cathode electrodes 26 inside the second openings 301 of the insulation layer 30.

The electron emission regions 24 are formed of a material that emits electrons when an electric field is applied to the material under a vacuum atmosphere, such as a carbon-based material or a nanometer-sized material (i.e. with a size ranging from 1 nm to 1000nm). For example, the electron emission regions 24 may include at least one of materials selected from the group consisting of carbon nanotubes, graphite, graphite nanofibers, diamonds, diamond-like carbon, fullerene (C₆₀), silicon nanowires, and combinations thereof.

Alternatively, the electron emission regions may be formed in a sharp tip structure made of a molybdenum-based material or a silicon-based material.

In the above-described structure, one cathode electrode 26, one gate electrode 28, and the electron emission region 24 located at one intersecting region of the cathode and gate electrodes 26 and 28 form a single electron emission element. One electron emission element may correspond to a single pixel region of the light emission device 101. Alternatively, two or more of the electron emission elements may correspond to the single pixel region of the light emission device 101.

The light emission unit 22 includes an anode electrode 32, a phosphor layer 34 located on a surface of the anode electrode 32, and a reflection layer 36 covering the phosphor layer 34.

The anode electrode 32 is formed of a transparent conductive material, such as indium tin oxide (ITO), so that visible light emitted from the phosphor layer 34 can transmit through the anode electrode 32. The anode electrode 32 is an acceleration electrode that receives a high voltage (anode voltage) of thousands of volts or more to place the phosphor layer 34 at a high potential state.

The phosphor layer 34 may be formed of a mixture of red, green, and blue phosphors, which can collectively emit white light. The phosphor layer 34 may be formed on an entire active area of the second substrate 14 or may be divided into a plurality of sections corresponding to the single pixel regions. FIGS. 1 and 2 show a case where the phosphor layer 34 is formed on the entire active area of the second substrate 14.

The reflection layer 36 may be an aluminum layer having a thickness of about several thousands of angstroms (Å) and including a plurality of tiny holes for passing the electrons. The reflection layer 36 functions to enhance the luminance of the light emission device 101 by reflecting the visible light, which is emitted from the phosphor layer 34 toward the first substrate 12, back to the second substrate 14. The anode electrode 32 formed by the transparent conductive material can be eliminated, and the reflection layer 36 can function as the anode electrode by receiving the anode voltage.

Spacers (not shown) can be disposed between the first and second substrates 12 and 14 in order to withstand compression force applied to the vacuum vessel 18 and to uniformly maintain a gap between the first and second substrates 12 and 14.

The light emission device 101 is driven when a scan driving voltage is applied to one of the cathode and gate electrodes 26 and 28, a data driving voltage is applied to the other of the cathode and gate electrodes 26 and 28, and a positive direct current (DC) anode voltage of thousands of volts or more is applied to the anode electrode 32.

Electric field is formed around the electron emission regions 24 at the pixels where a voltage difference between the cathode and gate electrodes 26 and 28 is equal to or greater than a threshold value, and thus electrons are emitted from the electron emission regions 24. The emitted electrons collide with a corresponding portion of the phosphor layer 34 by being attracted by the anode voltage applied to the anode electrode 32, thereby exciting the phosphor layer 34. A luminance of the phosphor layer 34 for each pixel corresponds to a number of electrons emitted to the corresponding pixel.

The light emission device 101 of this exemplary embodiment includes a getter layer 38 disposed on an inner surface of the sealing member 16 that is exposed toward an inner space of the vacuum vessel 18 to increase an adsorption area of the getter layer 38.

The sealing member 16 may be formed of a glass frame 161 and a pair of adhesive layers 162 disposed on upper and lower surfaces of the glass frame 161. The first and second substrates 12 and 14 and the glass frame 161 are sealed to each other when the adhesive layers 162 become molten in a firing process. The glass frame 161 may have a height of about 5 mm to 20 mm, and the adhesive layers 162 may include glass frit. Herein, the height of the glass frame 161 is defined as a length of the glass frame 161 along a direction from the first substrate 12 to the second substrate 14.

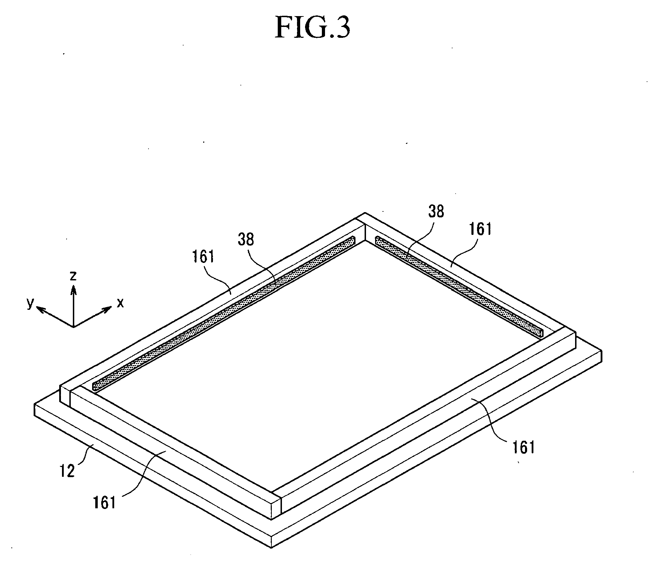

The glass frame 161 may be manufactured to have a rectangular section as shown in FIG. 3. In this case, one glass frame 161 having a rectangular section may be located for each side of the first substrate 12, and four glass frames 161 can be attached to each other by using other adhesive layers (not shown). The glass frame 161 is not limited to the structure shown in FIG. 3, and the shape of the glass frame 161 may be varied.

The getter layer 38 may be formed of an evaporating getter material or non-evaporating getter material. For the evaporating getter material, the getter layer 38 may include at least one of materials selected from the group consisting of barium, titanium, vanadium, zirconium, niobium, molybdenum, tantalum, barium-aluminum, zirconium-aluminum, silver-titanium, and zirconium-nickel. For the non-evaporating getter material, the getter layer 38 may include zirconium-vanadium-iron or zirconium-aluminum.

The getter layer 38 may be manufactured by coating the inner surface of the glass frame 161 with the evaporating or non-evaporating getter material, or by attaching ready-formed getter films to the inner surface of the glass frame 161. The getter layer 38 may be formed on the entire inner surface of the glass frame 161 or may be partially formed on the inner surface of the glass frame 161. FIG. 3 shows a case where the getter layer 38 is partially formed on the inner surface of the glass frame 161.

After an exhaust process of the vacuum vessel 18, the getter layer 38 is activated by a high-frequency heating device (not shown) placed outside of the glass frame 161. That is, the getter material is activated by heat induced from the high-frequency heating device to adsorb and remove gaseous molecules remaining within the vacuum vessel 18, thereby improving a vacuum degree of the vacuum vessel 18.

As described above, since the getter layer 38 is disposed on the inner surface of the glass frame 161, the adsorption area and adsorption efficiency of the getter layer 38 can be effectively enhanced. Therefore, the light emission device 101 can improve the initial degree of vacuum of the vacuum vessel 18, and thus suppress a decline of the degree of vacuum caused by out-gassing from the internal structure of the vacuum vessel 18. In addition, due to the high vacuum state of the vacuum vessel 18, emission efficiency and durability of the electron emission regions 24 can be enhanced.

The light emission device 101 of this exemplary embodiment may be used as a light source for emitting light toward a non-emissive type display panel. In the light emission device 101, the first and second substrates 12 and 14 may be spaced apart from each other by a relatively large distance of about 5 mm to 20 mm. The sealing member 16 is also formed to have the height of about 5 mm to 20 mm, so that the adsorption area of the getter layer 38 can be effectively increased.

By this relatively large distance between the first and second substrates 12 and 14, arcing in the vacuum vessel 18 can be reduced, and thus it becomes possible to apply a high voltage of above 10 kV, preferably of 10 kV to 15 kV, to the anode electrode 32. The light emission device 101 can realize a maximum luminance of about 10,000 cd/m² at a central portion of the active area.

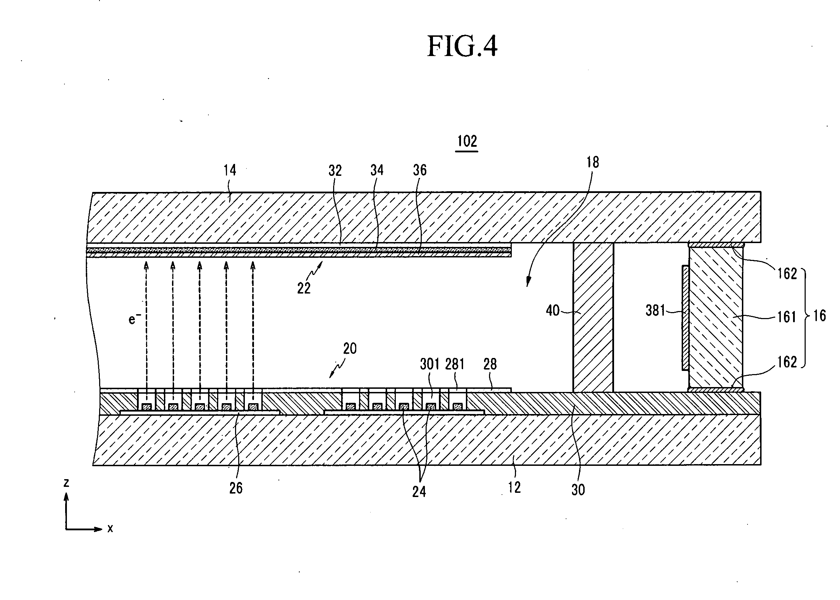

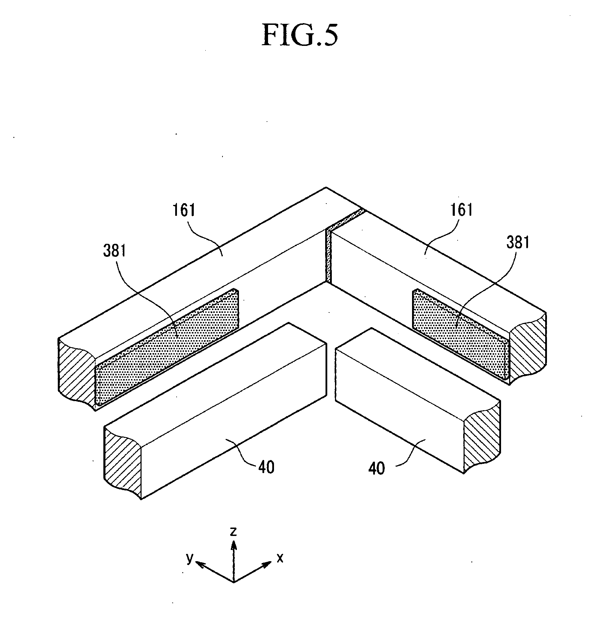

A light emission device of a second exemplary embodiment constructed not according to the present invention will be described with reference to FIGS. 4 and 5. Referring to FIGS. 4 and 5, a light emission device 102 of the second exemplary embodiment has substantially the same structure as that of the light emission device of the first exemplary embodiment except that a getter layer 381 is formed of an evaporating getter material, and a barrier 40 is located between the getter layer 381 and the active area. The same elements as of the first exemplary embodiment are denoted by the same reference numerals.

The barrier 40 is located between the first and second substrates 12 and 14 on the non-active area, and is spaced apart from the getter layer 381 by a predetermined interval. During the getter activation process, a conductive getter material is diffused toward the active area. The barrier 40 blocks the diffusion of the getter material into the active area, thereby preventing a short circuit between adjacent gate electrodes 28 and damage to the phosphor layer 34.

The barrier 40 may be formed to have a height substantially the same as the height of the sealing member 16. Herein, the height of the barrier 40 is defined as a length of the barrier 40 along a direction from the first substrate 12 to the second substrate 14. In this case, the barrier 40 also functions as an auxiliary spacer for withstanding compression force applied to the vacuum vessel 18 at the non-active area.

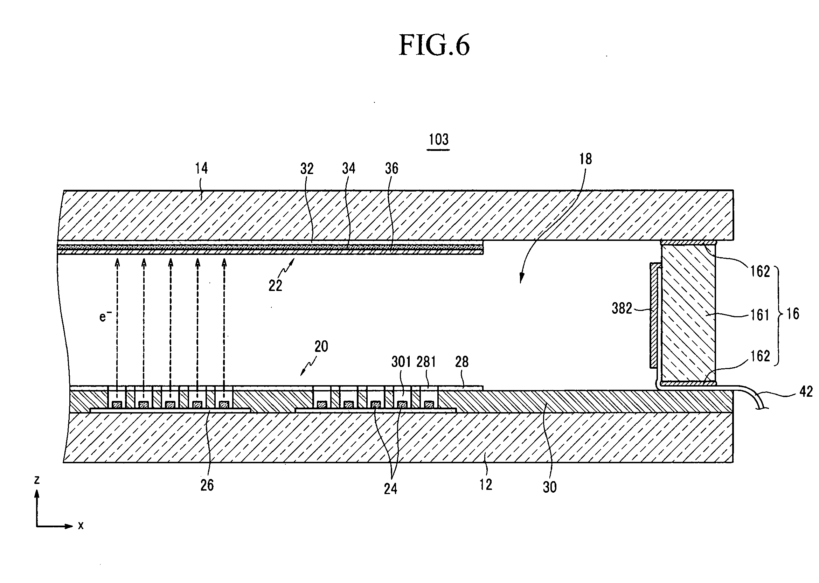

A light emission device of an exemplary embodiment of the present invention will be described with reference to FIG. 6. Referring to FIG. 6, a light emission device 103 of this exemplary embodiment has substantially the same structure as that of the light emission device of the first exemplary embodiment except that a getter layer 382 is formed of a non-evaporating getter material, and a lead wire 42 is located between the glass frame 161 and the getter layer 382 to activate the getter material. The same elements as of the first exemplary embodiment are denoted by the same reference numerals.

The lead wire 42 receives a predetermined amount of current from outside of the vacuum vessel 18 to heat and activate the getter layer 382. The lead wire 42 passes through the adhesive layer 162 of the sealing member 16, so that an end of the lead wire 42 is exposed outside of the vacuum vessel 18, while another end of the lead wire 42 is located inside vacuum vessel 18.

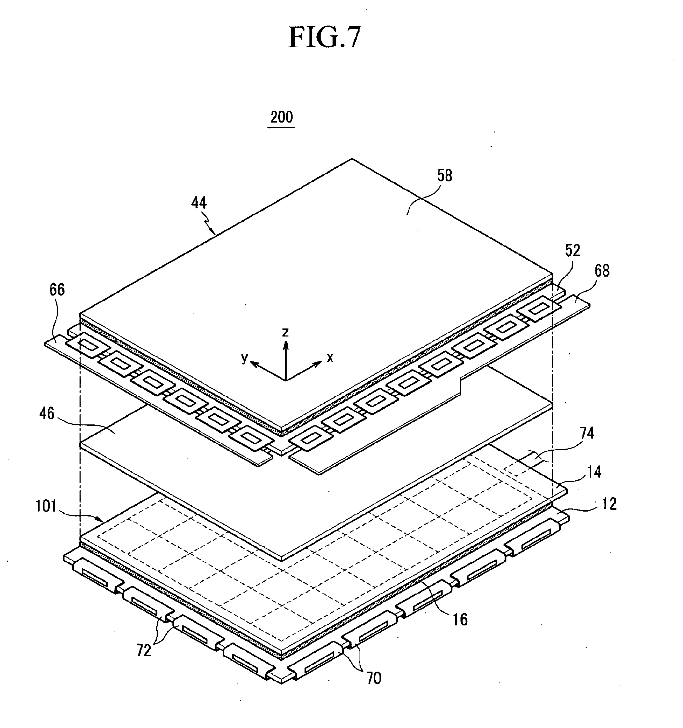

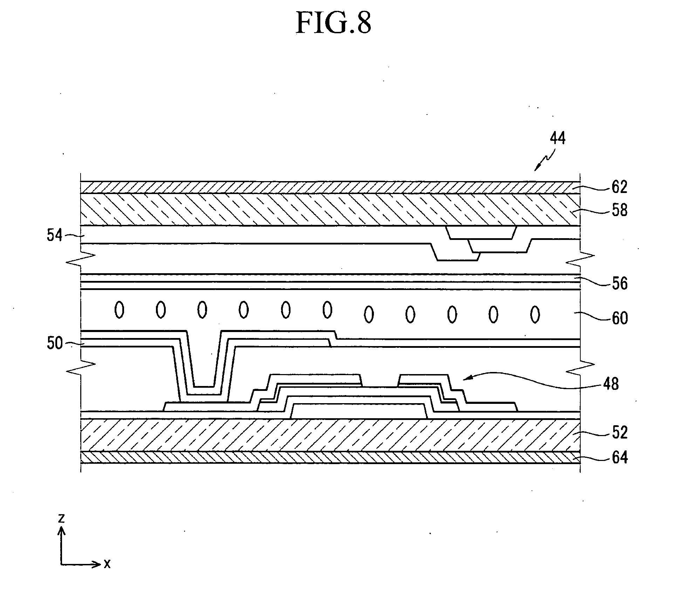

A display device of an exemplary embodiment constructed not according to the present invention will be described with reference to FIGS. 7 and 8. The display device of the present exemplary embodiment includes one light emission device among the light emission devices of the first to third exemplary embodiments. FIG. 7 shows a display device 200 that includes the light emission device 101 that is constructed as the first exemplary embodiment as an example.

Referring to FIG. 7, a display device 200 of this exemplary embodiment includes a light emission device 101 and a display panel 44 located in front of the light emission device 101. A light diffuser 46 for uniformly diffusing light emitted from the light emission device 101 to the display panel 44 may be located between the light emission device 101 and the display panel 44. The light diffuser 46 is spaced apart from the light emission device 101 by a predetermined distance.

A liquid crystal display panel or another non-emissive type display panel may be used for the display panel 44. In the following description, a liquid crystal display panel is explained as an example of the display panel 44.

Referring to FIG. 8, the display panel 44 includes a lower substrate 52 on which a plurality of thin film transistors (TFTs) 48 and a plurality of pixel electrodes 50 are formed, an upper substrate 58 on which color filter layers 54 and a common electrode 56 are formed, and a liquid crystal layer 60 provided between the lower and upper substrates 52 and 58. Polarizing plates 62 and 64 are attached on a top surface of the upper substrate 58 and a bottom surface of the lower substrate 52 to polarize the light passing through the display panel 44.

A pixel electrode 50 is located for each sub-pixel, and driving of each pixel electrode 50 is controlled by the TFT 48. The pixel electrodes 50 and the common electrode 56 are formed of a transparent conductive material. The color filter layers 54 include red, green, and blue layers arranged to correspond to respective sub-pixels. Three sub-pixels, i.e., with the red, green, and blue layers, which are located side by side, define a single pixel.

Whenever the TFT 48 of a predetermined sub-pixel is turned on, electric field is formed between the pixel electrode 50 and the common electrode 56. A twisting angle of liquid crystal molecules of the liquid crystal layer 60 changes thereby, and accordingly the light transmittance of the corresponding sub-pixel changes. The display panel 44 realizes a predetermined luminance and color for each pixel by controlling the light transmittance of the sub-pixels.

In FIG. 7, reference numeral 66 denotes a gate circuit board assembly for transmitting gate driving signals to each of gate electrodes of the TFTs 48 shown in FIG. 8, and reference numeral 68 denotes a data circuit board assembly for transmitting data driving signals to each of source electrodes of the TFTs 48.

Referring to FIG. 7, the light emission device 101 includes a plurality of pixels, the number of which is less than the number of pixels of the display panel 44, so that one pixel of the light emission device 101 corresponds to two or more pixels of the display panel 44. Each pixel of the light emission device 101 emits light in response to a highest gray level among gray levels of the corresponding pixels of the display panel 44. The light emission device 101 can represent a gray level of 2 to 8 bits at each pixel.

For convenience, the pixels of the display panel 44 are referred to as first pixels and the pixels of the light emission device 101 are referred to as second pixels. The first pixels corresponding to one second pixel are referred to as a first pixel group.

In a driving process of the light emission device 101, a signal control unit (not shown), which controls the display panel 44, firstly detects the highest gray level of the first pixel group, secondly operates a gray level required for emitting light from the second pixel in response to the detected high gray level and converts the operated gray level into digital data, thirdly generates a driving signal of the light emission device 101 using the digital data, and finally applies the driving signal to the light emission device 101.

The driving signal of the light emission device 101 includes a scan driving signal and a data driving signal. A scan driving signal is applied to either the cathode electrodes or the gate electrodes (e.g., the gate electrode), and a data driving signal is applied to the other electrode (e.g., the cathode electrodes).

Scan and data circuit board assemblies (not shown) of the light emission device 101 may be located on the back side of the light emission device 101. In FIG. 7, reference numeral 70 denotes first connectors for electrically connecting the cathode electrodes to the data circuit board assembly, and reference numeral 72 denotes second connectors for electrically connecting the gate electrodes to the scan circuit board assembly. Reference numeral 74 denotes a third connector for applying an anode voltage to the anode electrode.

When an image is displayed on the first pixel group, the corresponding second pixel of the light emission device 101 emits light with a predetermined gray level, synchronizing with the first pixel group. That is, the light emission device 101 independently controls the luminance of each pixel and thus provides a proper intensity of light to the corresponding pixels of the display panel 44 in proportion to the luminance of the first pixel group. As a result, the display device 200 of the present exemplary embodiment can enhance the contrast ratio of the screen, thereby improving the display quality.

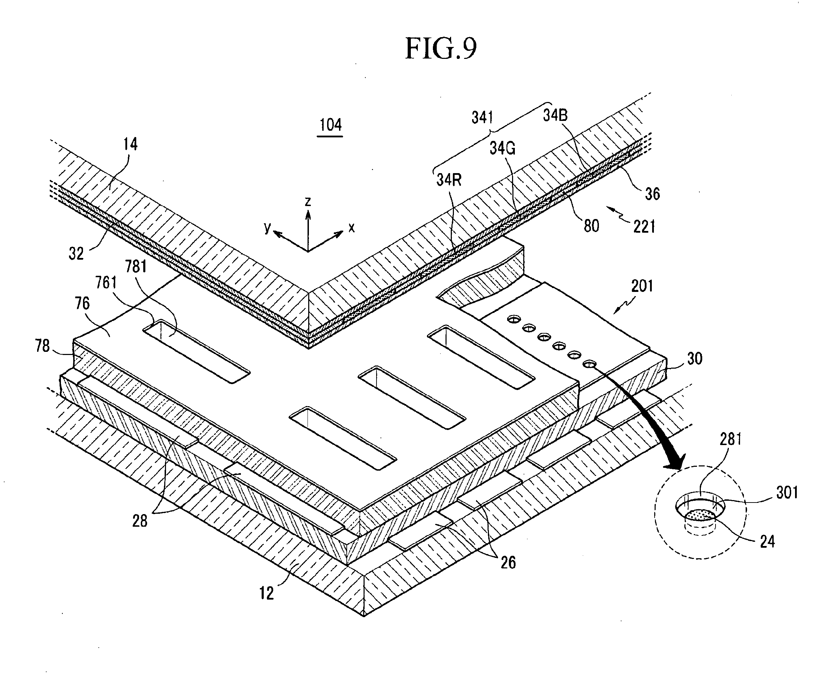

A light emission device of a fourth exemplary embodiment constructed not according to the present invention will be described with reference to FIG. 9. The same elements as of the first exemplary embodiment are denoted by the same reference numerals.

Referring to FIG. 9, an electron emission unit 201 in a light emission device 104 of this exemplary embodiment further includes a focusing electrode 76 disposed above the gate electrodes 28. If the insulation layer 30 located between the cathode electrodes 26 and the gate electrodes 28 is referred as a first insulation layer, a second insulation layer 78 is provided between the gate electrodes 28 and the focusing electrode 76.

Openings 761 and openings 781 for passing electrons are respectively formed in the focusing electrode 76 and the second insulation layer 78. The focusing electrode 76 is applied with 0 V or a negative direct current (DC) voltage of several through tens of volts to converge electrons on a central portion of a bundle of electron beams passing through the openings 761 of the focusing electrode 76. In other words, the focusing electrode 76 focuses the electron beams.

Each of regions where the cathode electrodes 26 intersect the gate electrodes 28 may be formed to have a size that is smaller than that of the first exemplary embodiment. A number of the electron emission regions 24 provided in each of regions where the cathode electrodes 26 intersect the gate electrodes 28 may be less than that of the first exemplary embodiment.

In a light emission unit 221, a plurality of phosphor layers 341 include red phosphor layers 34R, green phosphor layers 34G, and blue phosphor layers 34B that are spaced apart from each other, and a black layer 80 that is located between the phosphor layers 34R, 34G, and 34B. Each of regions where the cathode electrodes 26 intersect the gate electrodes 28 corresponds to a single sub-pixel region of the light emission device 104. The red, green, and blue phosphor layers 34R, 34G, and 34B are arranged to correspond to respective sub-pixel regions. Three sub-pixels, i.e., with the red, green, and blue phosphor layers 34R, 34G, and 34B, that are located side by side, define a single pixel.

An amount of electron emission at each sub-pixel is controlled by driving voltages applied to the cathode electrodes 26 and the gate electrodes 28. The electrons emitted from the electron emission regions 24 collide with the phosphor layers 34R, 34G, and 34B of corresponding sub-pixels, thereby exciting the phosphor layers 34R, 34G, and 34B. The light emission device 104 realizes a predetermined luminance and color for each pixel by controlling the amount of electron emission of the sub-pixels, thereby displaying a color image.

Regarding a sealing member (not shown) and a getter layer (not shown), the light emission device 104 has substantially the same structure as a light emission device among the light emission devices of the first to third exemplary embodiments.

While it has been described in the first and second exemplary embodiments that the electron emission units 20 and 201 are of a field emission array (FEA) type, the electron emission unit may be formed of a surface-conduction emission (SCE) type.

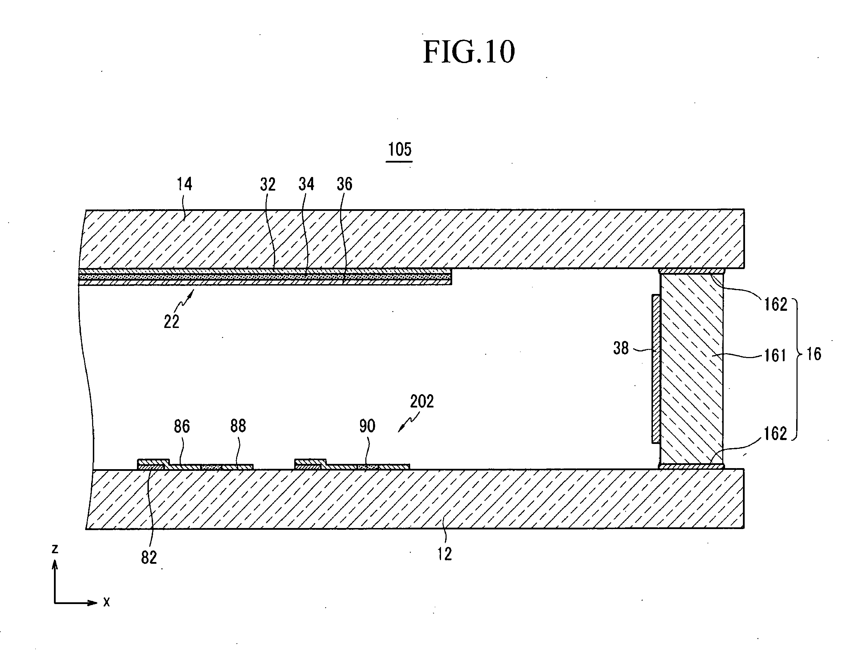

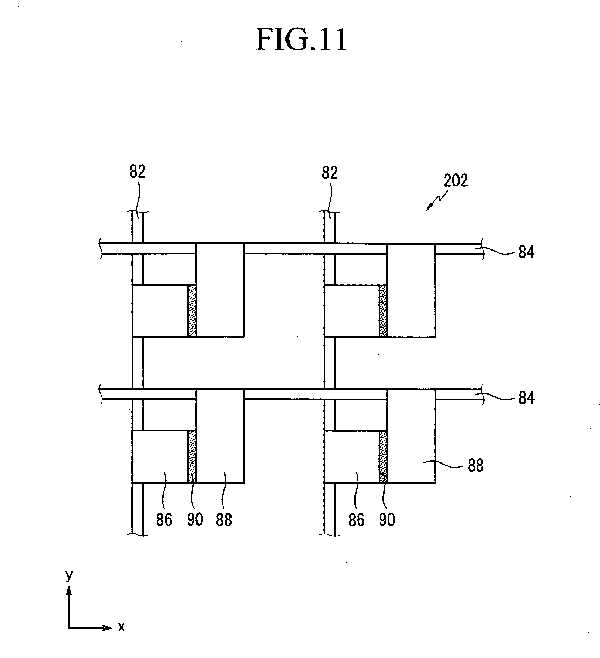

A light emission device constructed as a fifth exemplary embodiment constructed not according to the present invention will be described with reference to FIGS. 10 and 11. Referring to FIGS. 10 and 11, a light emission device 105 of this exemplary embodiment has substantially the same structure as that of one of the light emission devices among the first to fourth exemplary embodiments, except that an electron emission unit 202 is formed of the surface-conduction emission (SCE) type. As shown in FIG. 10, the light emission unit 22, the sealing member 16, and the getter layer 38 are provided in the light emission device in the same manner as provided in the first exemplary embodiment as an example.

The electron emission unit 202 includes first electrodes 82 extended in a first direction (y-axis direction of FIG. 11) on the first substrate 12, second electrodes 84 extended in a second direction (x-axis direction of FIG. 11) that is perpendicular to the first direction and insulated from the first electrodes 82, first conductive layers 86 connected to each of the first electrodes 82, second conductive layers 88 connected to each of the second electrodes 84 and spaced apart from the first conductive layers 86, and electron emission regions 90 disposed between the first and second conductive layers 86 and 88. The electron emission regions 90 is exposed to the inner space in order to emit electrons into the inner space.

The electron emission regions 90 may be formed of a carbon-based material. For example, the electron emission regions 90 may include at least one of materials selected from the group consisting of carbon nanotubes, graphite, graphite nanofibers, diamond-like carbon, fullerene (C₆₀), and combinations thereof. Alternatively, the electron emission regions may be formed by fine cracks provided between the first and second conductive layers 86 and 88.

In the above described structure, one first electrode 82, one second electrode 84, one first conductive layer 86, one second conductive layer 88, and one electron emission region 90 form a single electron emission element. One electron emission element or a plurality of electron emission elements may correspond to the single pixel region of the light emission device 105.

Whenever voltages are applied to the respective first and second electrodes 82 and 84, current flows in a direction parallel to the surface of the electron emission region 90 through the first and second conductive layers 86 and 88, thereby realizing the surface-conduction emission from the electron emission region 90.

## Claims

1. A light emission device comprising:
a vacuum vessel comprising:
a first substrate (12);
a second substrate (14) facing the first substrate (12), an inner space formed between the first and the second substrate (12, 14);
a sealing member (16) disposed between the first and second substrates (12, 14), the sealing member (16) enclosing the inner space;
an electron emission unit (20, 201, 202) arranged on an inner surface of the first substrate (12) that faces the inner space, the electron emission unit (20, 201, 202) including a plurality of electron emission regions (24, 90) for emitting electrons;
a light emission unit (22, 221) arranged on an inner surface of the second substrate (14) that faces the inner space, the light emission unit (22, 221) including an anode electrode (32) and a phosphor layer (34, 341); and
a getter layer (38, 382) arranged on an inner surface of the sealing member (16) that faces the inner space, wherein
the sealing member includes a glass frame (161), a first adhesive layer (162) arranged between the glass frame (161) and the first substrate (12), and a second adhesive layer (162) arranged between the glass frame (161) and the second substrate (14);
the getter layer (38, 382) is disposed on the glass frame (161); and
wherein the adhesive layers (162) include glass frit,
further comprising a wire (42) disposed between the sealing member (16) and the getter layer (382), the wire (42) extending out of the inner space, the getter layer (382) including a non-evaporating getter material.

2. The light emission device of claim 1, wherein the height of the barrier (40) is substantially the same as the height of the sealing member (16).

3. The light emission device of one of the preceding claims, wherein the electron emission unit (20, 201) comprises:
a cathode electrode (26);
a gate electrode (28) crossing the cathode electrode (26); and
an insulation layer (30) disposed between the cathode electrode (26) and the gate electrode (28), at least one of the electron emission regions (24) being connected to the cathode electrode (26).

4. The light emission device of claim 3, wherein the electron emission unit (201) further includes a focusing electrode (76) for focusing an electron beam that is generated from the at least one of the electron emission regions (24).

5. The light emission device of one of claims 1 or 2, wherein the electron emission unit (202) includes:
a first electrode (82);
a second electrode (84) being insulated from the first electrode (82) and crossing the first electrode (82);
a first conductive layer (86) electrically connected to the first electrode (82);
and
a second conductive layer (88) electrically connected to the second electrode (84), one of the electron emission regions (90) located between the first and second conductive layers (86, 88), a portion of the one of the electron emission regions (90) being exposed to the inner space in order to emit electrons into the inner space.

6. The light emission device of one of the preceding claims, wherein the phosphor layer (34) is a white phosphor layer for emitting white visible light.

7. The light emission device of one of the preceding claims, wherein the height of the sealing member (16) is about 5 millimeters to about 20 millimeters.

8. A display device comprising
a display panel (44) for displaying an image, and
a light emission device (101, 102, 103, 104, 105) according to one of claims 1 through 7 for emitting light toward the display panel.

9. The display device of claim 8, wherein the display panel (44) includes first pixels and the light emission device (101, 102, 103, 104, 105) includes second pixels, the number of second pixels is less than the number of first pixels, and luminance of each second pixel is independently controlled in response to a highest gray level among gray levels of the corresponding first pixels.

10. The display device of claim 8, wherein the display panel (44) includes a liquid crystal display panel.

## Patentansprüche

1. Lichtemissionsvorrichtung, umfassend einen Vakuumbehälter, umfassend:
ein erstes Substrat (12);
ein zweites Substrat (14), das zu dem ersten Substrat (12) weist, wobei zwischen dem ersten und dem zweiten Substrat (12, 14) ein Innenraum ausgebildet ist;
ein Dichtungselement (16), das zwischen dem ersten und zweiten Substrat (12, 14) angeordnet ist, wobei das Dichtungselement (16) den Innenraum umschließt;
eine Elektronenemissionseinheit (20, 201, 202), die auf einer zu dem Innenraum weisenden Innenfläche des ersten Substrats (12) angeordnet ist, wobei die Elektronenemissionseinheit (20, 201, 202) eine Mehrzahl von Elektronenemissionsbereichen (24, 90) zur Emission von Elektronen einschließt;
eine Lichtemissionseinheit (22, 221), die auf einer zu dem Innenraum weisenden Innenfläche des zweiten Substrats (14) angeordnet ist, wobei die Lichtemissionseinheit (22, 221) eine Anode (32) und eine Phosphorschicht (34, 341) einschließt; und
eine Getterschicht (38, 382), die auf einer zu dem Innenraum weisenden Innenfläche des Dichtungselements (16) angeordnet ist, wobei
das Dichtungselement einschließt: einen Glasrahmen (161), eine erste Klebeschicht (162), die zwischen dem Glasrahmen (161) und dem ersten Substrat (12) angeordnet ist, und eine zweite Klebeschicht (162), die zwischen dem Glasrahmen (161) und dem zweiten Substrat (14) angeordnet ist;
die Getterschicht (38, 382) auf dem Glasrahmen (161) angeordnet ist; und wobei die Klebeschichten (162) Glasfritte einschließen,
ferner umfassend: einen Draht (42), der zwischen dem Dichtungselement (16) und der Getterschicht (382) angeordnet ist, wobei sich der Draht (42) aus dem Innenraum heraus erstreckt, wobei die Getterschicht (382) ein nicht verdampfendes Gettermaterial einschließt.

2. Lichtemissionsvorrichtung nach Anspruch 1, wobei die Höhe der Barriere (40) im Wesentlichen der Höhe des Dichtungselements (16) entspricht.

3. Lichtemissionsvorrichtung nach einem der vorangehenden Ansprüche, wobei die Elektronenemissionseinheit (20, 201) umfasst:
eine Kathode (26);
eine Gateelektrode (28), welche die Kathode (26) kreuzt; und
eine Isolationsschicht (30), die zwischen der Kathode (26) und der Gateelektrode (28) angeordnet ist, wobei mindestens einer der Elektronenemissionsbereiche (24) mit der Kathode (26) verbunden ist.

4. Lichtemissionsvorrichtung nach Anspruch 3, wobei die Elektronenemissionseinheit (201) ferner eine Fokussierelektrode (76) zum Fokussieren eines von dem mindestens einen der Elektronenemissionsbereiche erzeugten Elektronenstrahls einschließt.

5. Lichtemissionsvorrichtung nach einem der Ansprüche 1 oder 2, wobei die Elektronenemissionseinheit (202) einschließt:
eine erste Elektrode (82);
eine zweite Elektrode (84), die von der ersten Elektrode (82) isoliert ist und die erste Elektrode (82) kreuzt;
eine erste leitfähige Schicht (86), die mit der ersten Elektrode (82) elektrisch verbunden ist; und
eine zweite leitfähige Schicht (88), die mit der zweiten Elektrode (84) elektrisch verbunden ist, wobei einer der Elektronenemissionsbereiche (90) zwischen der ersten und zweiten leitfähigen Schicht (86, 88) befindlich ist, wobei ein Teil des einen der Elektronenemissionsbereiche (90) gegenüber dem Innenraum exponiert ist, um Elektronen in den Innenraum zu emittieren.

6. Lichtemissionsvorrichtung nach einem der vorangehenden Ansprüche, wobei die Phosphorschicht (34) eine weiße Phosphorschicht zur Emission weißen sichtbaren Lichts ist.

7. Lichtemissionsvorrichtung nach einem der vorangehenden Ansprüche, wobei die Höhe des Dichtungselements (16) ca. 5 Millimeter bis ca. 20 Millimeter beträgt.

8. Anzeigevorrichtung, umfassend:
eine Anzeigetafel (44) zur Anzeige eines Bildes; und
eine Lichtemissionsvorrichtung (101, 102, 103, 104, 105) nach einem der Ansprüche 1 bis 7 zur Emission von Licht in Richtung der Anzeigetafel.

9. Anzeigevorrichtung nach Anspruch 8, wobei die Anzeigetafel (44) erste Pixel einschließt und die Lichtemissionsvorrichtung (101, 102, 103, 104, 105) zweite Pixel einschließt, wobei die Anzahl der zweiten Pixel kleiner ist als die Anzahl der ersten Pixel und die Leuchtdichte jedes zweiten Pixels entsprechend einem höchsten Grauwert aus den Grauwerten der entsprechenden ersten Pixel unabhängig gesteuert wird.

10. Anzeigevorrichtung nach Anspruch 8, wobei die Anzeigetafel (44) eine Flüssigkristallanzeigetafel einschließt.

## Revendications

1. Dispositif d'émission de lumière comprenant une enceinte sous vide comprenant :
un premier substrat (12) ;
un deuxième substrat (14) en vis-à-vis du premier substrat (12), un espace intérieur formé entre le premier et le deuxième substrat (12, 14) ;
un élément d'étanchéité (16) disposé entre les premier et deuxième substrats (12, 14), l'élément d'étanchéité (16) entourant l'espace intérieur ;
une unité d'émission d'électrons (20, 201, 202) disposée sur une surface intérieure du premier substrat (12) qui est en vis-à-vis de l'espace intérieur, l'unité d'émission d'électrons (20, 201, 202) comportant une pluralité de zones d'émission d'électrons (24, 90) destinées à émettre des électrons ;
une unité d'émission de lumière (22, 221) disposée sur une surface intérieure du deuxième substrat (14) qui est en vis-à-vis de l'espace intérieur, l'unité d'émission de lumière (22, 221) comportant une électrode anodique (32) et une couche de phosphore (34, 341) ; et
une couche getter (38, 382) disposée sur une surface intérieure de l'élément d'étanchéité (16) qui est en vis-à-vis de l'espace intérieur, où
l'élément d'étanchéité comporte un cadre en verre (161), une première couche adhésive (162) disposée entre le cadre en verre (161) et le premier substrat (12), et une deuxième couche adhésive (162) disposée entre le cadre en verre (161) et le deuxième substrat (14) ;
la couche getter (38, 382) est disposée sur le cadre en verre (161) ; et où les couches adhésives (162) comprennent de la fritte de verre,
comprenant en outre un fil (42) disposé entre l'élément d'étanchéité (16) et la couche getter (382), le fil (42) s'étendant en dehors de l'espace intérieur, la couche getter (382) comportant un matériau getter non évaporable.

2. Dispositif d'émission de lumière de la revendication 1, dans lequel la hauteur de la barrière (40) est sensiblement la même que la hauteur de l'élément d'étanchéité (16).

3. Dispositif d'émission de lumière de l'une des revendications précédentes, dans lequel l'unité d'émission d'électrons (20, 201) comprend :
une électrode cathodique (26) ;
une électrode de grille (28) traversant l'électrode cathodique (26) ; et
une couche d'isolation (30) disposée entre l'électrode cathodique (26) et l'électrode de grille (28), au moins l'une des zones d'émission d'électrons (24) étant reliée à l'électrode cathodique (26).

4. Dispositif d'émission de lumière de la revendication 3, dans lequel l'unité d'émission d'électrons (201) comporte en outre une électrode de focalisation (76) destinée à focaliser un faisceau d'électrons qui est généré à partir de l'au moins une des zones d'émission d'électrons (24).

5. Dispositif d'émission de lumière de l'une des revendications 1 et 2, dans lequel l'unité d'émission d'électrons (202) comporte :
une première électrode (82) ;
une deuxième électrode (84) qui est isolée de la première électrode (82) et croisant la première électrode (82) ;
une première couche conductrice (86) reliée électriquement à la première électrode (82) ; et
une deuxième couche conductrice (88) reliée électriquement à la deuxième électrode (84), l'une des zones d'émission d'électrons (90) située entre les première et deuxième couches conductrices (86, 88), une partie de l'une des zones d'émission d'électrons (90) étant exposée à l'espace intérieur afin d'émettre des électrons dans l'espace intérieur.

6. Dispositif d'émission de lumière de l'une des revendications précédentes, dans lequel la couche de phosphore (34) est une couche de phosphore blanc pour émettre de la lumière blanche visible.

7. Dispositif d'émission de lumière de l'une des revendications précédentes, dans lequel la hauteur de l'élément d'étanchéité (16) est comprise entre environ 5 millimètres et environ 20 millimètres.

8. Dispositif d'affichage comprenait
un panneau d'affichage (44) destiné à afficher une image, et
un dispositif d'émission de lumière (101, 102, 103, 104, 105) selon l'une des revendications 1 à 7 destiné à émettre une lumière vers le panneau d'affichage.

9. Dispositif d'affichage de la revendication 8, dans lequel le panneau d'affichage (44) comporte des premiers pixels et le dispositif d'émission de lumière (101, 102, 103, 104, 105) comporte des deuxièmes pixels, le nombre des deuxièmes pixels est inférieur au nombre des premiers pixels, et la luminance de chaque deuxième pixel est indépendamment commandée en réponse à un niveau de gris plus élevé entre des niveaux de gris des premiers pixels correspondants.

10. Dispositif d'affichage de la revendication 8, dans lequel le panneau d'affichage (44) comporte un panneau d'affichage à cristaux liquides.
